# EUROPÄISCHE PATENTANMELDUNG

(11) **EP 1 721 709 A2**
(43) Veröffentlichungstag der Anmeldung: **15.11.2006**
(21) Anmeldenummer: 06008053.8
(22) Anmeldetag: 19.04.2006
(51) Int. Cl.: B25H 3/02

(54) **Wagen zum Transportieren und Lagern von Schabern**

(30) Priorität: 09.05.2005 DE 202005007682 U
(71) Anmelder: Joh. Clouth GmbH & Co. KG, 42499 Hückeswagen (DE)
(72) Erfinder: Knopp, Joachim, 42499 Hückeswagen (DE)
(74) Vertreter: Steimle, Josef

(57) **Zusammenfassung**

Die Erfindung betrifft einen Wagen (10) zum Transportieren und Lagern von Schabern (12), wobei der Wagen ein im Wesentlichen quaderförmiges Gehäuse (16) mit einer Vorderseite (24), einem Boden (20) und einem Deckel (48) aufweist, und im Gehäuse mehrere Abteile (18) vorgesehen sind, dadurch gekennzeichnet, dass der Deckel einen parallel zur Deckelebene verschiebbaren oder verschwenkbaren Deckelabschnitt (50) aufweist.

## Beschreibung

Die Erfindung betrifft einen Wagen zum Transportieren und Lagern von Schabern, wobei der Wagen ein im Wesentlichen quaderförmiges Gehäuse mit einer Vorderseite, einem Boden und einem Deckel aufweist und im Gehäuse mehrere Abteile vorgesehen sind.

Ein derartiger Wagen ist zum Beispiel aus der DE 298 00 461 U1 bekannt. Dieser Wagen dient zum Transport und Lagern von Schabermessern, welche ihrerseits aufgerollt und in einem Karton untergebracht sind. Derartige Schaber oder Schabermesser dienen zum Reinigen von Walzen in der Papierindustrie und können mitunter eine Länge von 10 m und mehr aufweisen. Um die Schaber handhaben zu können werden sie aufgerollt und in einem Karton gelagert. Das Gehäuse des Wagens dient zur Aufnahme von fünf Kartons und besitzt einen aufschwenkbaren Deckel, der an seinem hinteren Ende schwenkbar gelagert ist. Außerdem wird die vertikale Vorderseite, die sich über etwa zwei Drittel der Höhe des Wagens erstreckt, von einer aufschwenkbaren Tür gebildet. Der Deckel ist an der Vorderseite, das heißt im Bereich der auf der aufschwenkbaren Tür aufliegenden Kante angefast, das heißt er besitzt einen unter einem Winkel sowohl zur Waagerechten als auch zur Vertikalen stehenden, nach unten gezogenen Deckelabschnitt.

Ein derartiger Deckel ist zum einen aufwändig herzustellen, zum anderen benötigt der Wagen nach oben Platz, so dass der Deckel aufgeschwenkt werden kann. Befindet sich oberhalb des Wagens nicht genügend Freiraum, was z.B. dann der Fall ist, wenn der Wagen in einem Regal steht und oberhalb des Wagens sich ein Regalbrett befindet, kann der Deckel nicht aufgeschwenkt werden und es können keine Schaber aus dem Wagen entnommen werden.

Der Erfindung liegt daher die Aufgabe zugrunde, einen Wagen zum Transport und zum Lagern von Schabern vorzuschlagen, welcher ein größeres Einsatzgebiet besitzt und preiswerter herstellbar ist.

Diese Aufgabe wird mit einem Wagen der eingangs genannten Art erfindungsgemäß dadurch gelöst, dass der Deckel einen parallel zur Deckelebene verschiebbaren oder verschwenkbaren Deckelabschnitt aufweist.

Der erfindungsgemäße Wagen besitzt den wesentlichen Vorteil, dass der Deckel wesentlich einfacher ausgestaltet ist als beim aus dem eingangs genannten Stand der Technik bekannten Wagen, da er lediglich von einem plattenförmigen Deckelabschnitt gebildet wird. Ein weiterer Vorteil besteht darin, dass der Wagen nach oben keinen Freiraum bedarf, um den Deckel öffnen zu können, die im Wagen gelagerten Schaber entnehmen zu können. Es besteht sogar die Möglichkeit, dass auf dem Wagen sogar andere Gegenstände abgelegt werden können, ohne dass dadurch die Entnahme der Schaber behindert wird.

Ein derartiger Wagen kann wesentlich preiswerter hergestellt werden und ist universeller einsetzbar, da er zum Beispiel in in Wagengröße vorgesehene Aufnahmeöffnungen in Regalen eingeschoben werden kann. Oberhalb des Wagens kann sich ein Regalbrett befinden, welches sich nicht als störend auswirkt.

Bei einer Weiterbildung ist vorgesehen, dass die Vorderseite als aufschwenkbare Tür mit einem vertikalen Scharnier ausgebildet ist. Diese Tür erstreckt sich vom Boden bis zur horizontalen Ebene des Deckels und bildet die gesamte Vorderseite. Über diese aufschwenkbare Tür kann auf den Inhalt des Wagens zugegriffen werden, das heißt der Wagen kann mit Kartons beschickt oder die Schaber oder leeren Kartons können entnommen werden.

Eine vorteilhafte Weiterbildung sieht vor, dass die Tür in horizontaler Richtung zweigeteilt ist und jeder Türenteil, d.h. der obere und der untere Türenteil unabhängig vom anderen aufschwenkbar ist. Dies hat den wesentlichen Vorteil, dass zur Entnahme der Schaber nicht die gesamte Tür geöffnet werden muss, sondern dass lediglich der obere Türenteil aufgeschwenkt werden muss und der den Schaber enthaltende Behälter vom unteren Teil der Tür im Wagen zurückgehalten wird.

Dabei kann der obere Teil der Tür am vertikalen Holm des Gehäuses des Wagens angeschlagen sein, so dass sich die Tür in horizontaler Richtung aufschwenken lässt, es ist jedoch auch denkbar, dass der obere Teil der Tür über ein waagerechtes Scharnier an der Oberkante des unteren Teils der Tür angeschlagen ist, so dass sich der obere Teil der Tür nach Art einer Klappe nach unten aufschwenken beziehungsweise aufklappen lässt.

Gemäß einem bevorzugten Ausführungsbeispiel sind die beiden Türenteile miteinander verbindbar und zusammen aufschwenkbar. Die beiden Türenteile können also auch zusammen wie eine herkömmliche, einteilige Tür bedient werden.

Um den den Schaber enthaltenden Behälter sicher im Gehäuseinnern zurückhalten zu können, ist der untere Teil der Tür etwa doppelt so hoch wie der obere Türenteil. Wird lediglich der obere Teil der Tür geöffnet, so kann der Schaber problemlos entnommen werden, wohingegen der Behälter des Schabers gegen versehentliche Entnahme gesichert ist.

Bei einem bevorzugten Ausführungsbeispiel sind die Tür und/oder der Deckel aus einem durchsichtigen oder durchscheinenden Material gebildet, so dass der Wageninhalt von außen erkennbar ist. Insbesondere sind die Tür und/oder der Deckel mit einer Scheibe aus Kunststoff, insbesondere aus Plexiglas, verkleidet. Dadurch wird sofort von außen erkennbar, ob der gewünschte Schaber im Wagen enthalten ist oder nicht, ohne dass die Tür oder der Deckel geöffnet werden muss. Außerdem ist sofort erkennbar, ob der Wagen nachgefüllt werden muss.

Ein optimaler Zugriff auf den Wageninhalt wird dadurch geschaffen, dass der Deckelabschnitt sich etwa über die halbe Tiefe des Deckels erstreckt. Dadurch kann die Oberseite des Wagens etwa um die halbe Fläche geöffnet werden, wodurch bequem auf den Inhalt, das heißt auf die gelagerten Schaber zugegriffen werden kann. Außerdem ist die Beschickung des Wagens mit neuen Schabern, d.h. mit neuen Kartons aufgrund der großen Deckelöffnung einfach durchführbar.

Um sowohl die Tür als auch den Deckel einfach öffnen zu können, sind der verschiebbare oder verschwenkbare Deckelabschnitt und die Tür, insbesondere jeder Teil der Tür, mit einem Handknauf versehen. Außerdem besitzt der Wagen einen Handlauf, an welchem er verschoben werden kann.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in den Ansprüchen und in der Beschreibung erwähnten Merkmale jeweils einzeln für sich oder in beliebiger Kombination erfindungswesentlich sein.

In der Zeichnung zeigen:
- Figur 1: eine Seitenansicht des erfindungsgemäßen Wagens;
- Figur 2: eine Ansicht auf die Vorderseite des Wagens in Richtung des Pfeils II gemäß Figur 1;
- Figur 3: eine vergrößerte Wiedergabe des Ausschnitts III gemäß Figur 1;
- Figur 4: eine perspektivische Darstellung des Wagens mit geschlossenem Deckel; und
- Figur 5: eine perspektivische Darstellung des Wagens mit teilweise geöffnetem Deckel.

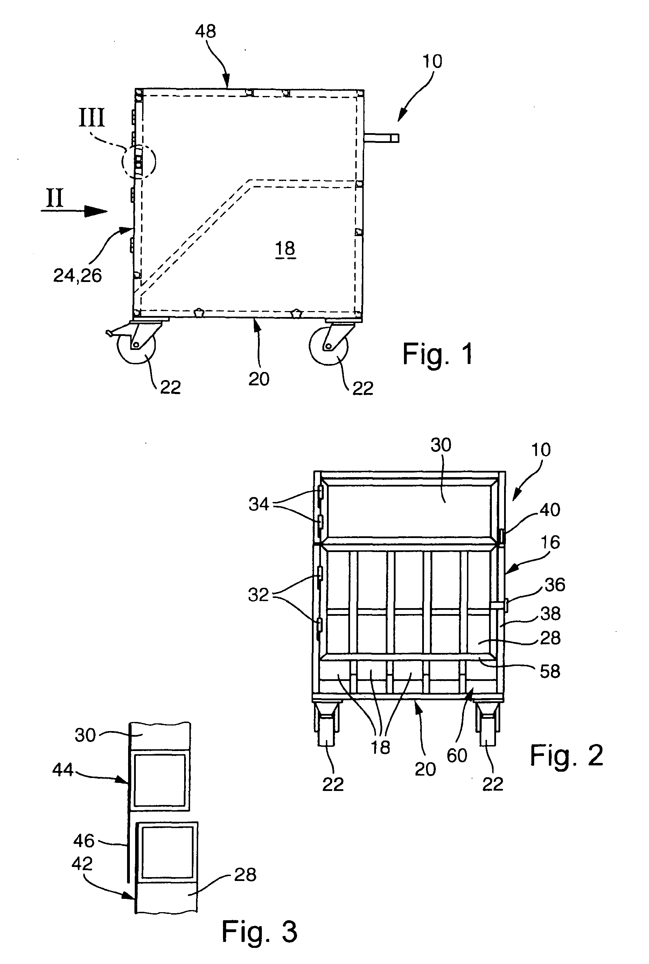

Die Figuren 1, 2 und 5 zeigen einen insgesamt mit 10 bezeichneten Wagen zum Transportieren und Lagern von Schabern 12. Jeweils ein oder eine Vielzahl von Schabern 12 ist aufgewickelt in einem Schaberbehälter 14 oder Karton untergebracht, wobei der Wagen 10 zur Aufnahme von insgesamt fünf Schaberbehälter 14 dient. Hierfür besitzt das Gehäuse 16 des Wagens 10 fünf Abteile 18, in welche die Schaberbehälter 14 eingeschoben werden können.

Das Gehäuse 18 ist im Wesentlichen quaderförmig ausgebildet und besitzt einen Boden 20, an welchem Rollen 22 vorgesehen sind, von denen insbesondere zwei lenkbar und/oder arretierbar sind. Die Vorderseite 24 des Wagens 10 wird von einer Tür 26 gebildet, welche aufschwenkbar ist. Hierfür weist die Tür 26, die von einem unteren Türenteil 28 und einem oberen Türenteil 30 gebildet wird, vertikale, am Vertikalholm des Gehäuses 16 befestigte Scharniere 32 und 34 auf, um welche die Tür 26 verschwenkbar ist. Das untere Türenteil 28 besitzt zudem einen Verschluss 36, über welchen das Türenteil 28 in der Schließstellung am gegenüber liegenden vertikalen Gehäuseholm 38 verriegelbar ist. Das obere Türenteil 30 besitzt ebenfalls einen Verschluss 40, mit welchem das obere Türenteil 30 am unteren Türenteil 28 verriegelbar ist. Dies bedeutet, dass bei offenem Verschluss 40 das obere Türenteil 30 unabhängig vom unteren Türenteil 28 aufschwenken lässt, was andeutungsweise in Figur 3 dargestellt ist. Bei verriegeltem Verschluss 40 sind beide Türenteile 28 und 30 nur gemeinsam aufschwenkbar.

Die Sichtseite sowohl des unteren Türenteils 28 als auch des oberen Türenteils 30 wird jeweils von einer Plexiglasscheibe 42 beziehungsweise 44 gebildet, wobei der untere Rand 46 der Plexiglasscheibe 44 den oberen Rand der Plexiglasscheibe 42 übergreift. Aufgrund dieses Überstandes wird ein dichter Verschluss der Tür 26 geschaffen, so dass z.B. kein Staub eindringen kann.

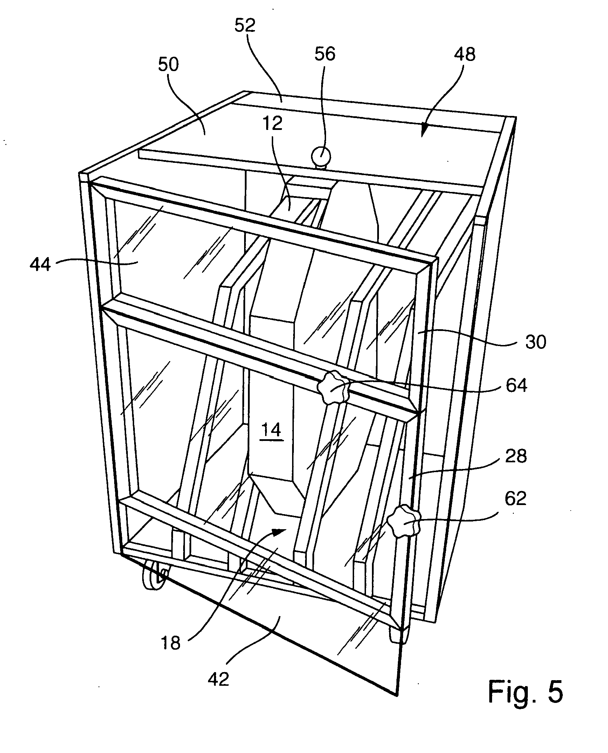

Den oberen Abschluss des Gehäuses 16 bildet ein Deckel 48, der einen verschiebbaren Deckelabschnitt 50 aufweist, der in seiner Schließlage, die in Figur 1 dargestellt ist, an der Oberkante des Türenteils 30 anliegt. In geöffneter Position lässt sich dieser Deckelabschnitt 50 über einen dahinter liegenden Deckelabschnitt 52 verschieben, was in der Figur 5 gezeigt ist. Zum Betätigen des Deckelabschnitts 50 besitzt dieser an seiner vorderen Kante 54 einen Handknauf 56.

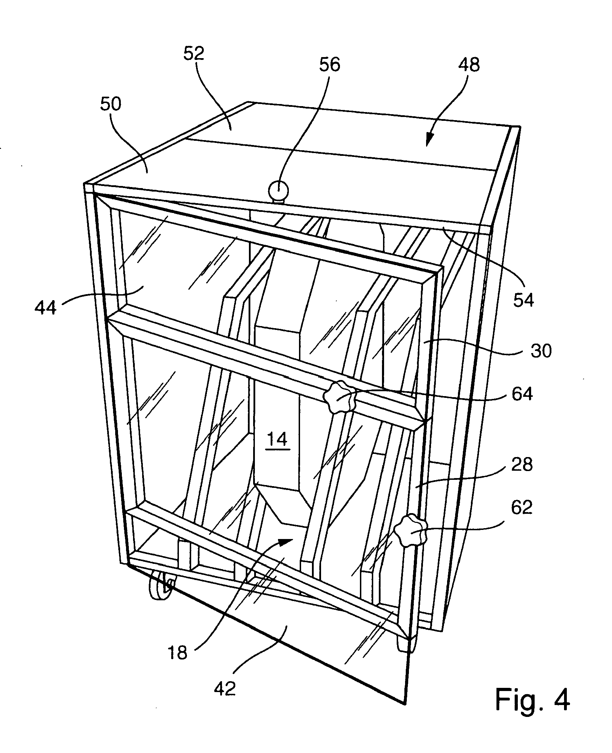

Es sei noch erwähnt, dass der Deckelabschnitt 50 sich in etwa über die halbe Tiefe des Deckels 48 erstreckt und dass die Höhe des oberen Türenteils 30 in etwa der halben Höhe des unteren Türenteils 28 entspricht. Außerdem ist in Figur 2 erkennbar, dass zwischen der unteren Kante 58 des unteren Türenteils 28 und dem Boden 20 ein Spalt 60 vorgesehen ist, der von der Plexiglasscheibe 42 überdeckt wird. Außerdem ist in den Figuren 4 und 5 jeweils ein Handknauf 62 und 64 dargestellt, mit denen das untere Türenteil 28 beziehungsweise das obere Türenteil 30 bedienbar und verriegelbar sind.

Der erfindungsgemäße Wagen 10 ist gegenüber dem Stand der Technik wesentlich einfacher aufgebaut und es ist leicht erkennbar, dass oberhalb des Wagens 10, insbesondere oberhalb des Deckels 48, kein Freiraum vorhanden sein muss, um den Schaber 12 aus dem Wagen 10 entnehmen zu können.

## Patentansprüche

1. Wagen (10) zum Transportieren und Lagern von Schabern (12), wobei der Wagen (10) ein im Wesentlichen quaderförmiges Gehäuse (16) mit einer Vorderseite (24), einem Boden (20) und einem Deckel (48) aufweist, und im Gehäuse (16) mehrere Abteile (18) vorgesehen sind, **dadurch gekennzeichnet, dass** der Deckel (48) einen parallel zur Deckelebene verschiebbaren oder verschwenkbaren Deckelabschnitt (50) aufweist.

2. Wagen nach Anspruch 1, **dadurch gekennzeichnet, dass** die Vorderseite (24) als aufschwenkbare Tür (26) mit einem vertikalen Scharnier (32, 34) ausgebildet ist.

3. Wagen nach Anspruch 2, **dadurch gekennzeichnet, dass** die Tür (26) in horizontaler Richtung zweigeteilt ist und jeder Türenteil (28, 30) unabhängig vom anderen aufschwenkbar ist.

4. Wagen nach Anspruch 3, **dadurch gekennzeichnet, dass** die beiden Türenteile (28, 30) miteinander verbindbar und zusammen aufschwenkbar sind.

5. Wagen nach Anspruch 2 oder 3, **dadurch gekennzeichnet, dass** der untere Türenteil (28) etwa doppelt so hoch ist, wie der obere Türenteil (30).

6. Wagen nach einem der Ansprüche 2 bis 5, **dadurch gekennzeichnet, dass** zwischen dem unteren Türenteil (28) und dem Boden (20) ein Spalt (60) vorgesehen ist.

7. Wagen nach Anspruch 6, **dadurch gekennzeichnet, dass** der obere Türenteil (30) etwa doppelt so hoch ist wie der Spalt in (60).

8. Wagen nach einem der vorhergehenden Ansprüche, **dadurch gekennzeichnet, dass** sich die Tür (26) bis zur horizontalen Ebene des Deckels (48) erstreckt.

9. Wagen nach einem der vorhergehenden Ansprüche, **dadurch gekennzeichnet, dass** die Tür (26) von einer transparenten oder transluzenten Abdeckung, insbesondere einer Plexiglasscheibe (42, 44), abgedeckt ist.

10. Wagen nach einem der vorhergehenden Ansprüche, **dadurch gekennzeichnet, dass** der verschiebbare Deckelabschnitt (50) von einer transparenten oder transluzenten Abdeckung, insbesondere einer Plexiglasscheibe gebildet ist.

11. Wagen nach einem der Ansprüche 1 bis 9, **dadurch gekennzeichnet, dass** der verschiebbare Deckelabschnitt (50) von einer Holz- oder Metallabdeckung, insbesondere einem Stahlblech gebildet ist.

12. Wagen nach einem der vorhergehenden Ansprüche, **dadurch gekennzeichnet, dass** der Deckelabschnitt (50) sich etwa über die halbe Tiefe des Deckels (48) erstreckt.

13. Wagen nach einem der vorhergehenden Ansprüche, **dadurch gekennzeichnet, dass** der Deckelabschnitt (50) und die Tür (26), insbesondere jeder Teil (28, 30) der Tür (26), einen Handknauf (56, 62, 64) besitzt.

14. Wagen nach einem der vorhergehenden Ansprüche, **dadurch gekennzeichnet, dass** vollständig geschlossen ist.
